# EUROPEAN PATENT SPECIFICATION

(11) **EP 4 298 006 B1**
(45) Date of publication and mention of the grant of the patent: **06.05.2026**
(21) Application number: 21708970.5
(22) Date of filing: 26.02.2021
(51) Int. Cl.: B62D 25/06, B62D 29/00

(54) **HYBRID ROOF CROSS MEMBER FOR A CAR BODY AND METHOD FOR E-COATING A CAR BODY INCLUDING A HYBRID ROOF CROSS MEMBER**
HYBRIDER DACHQUERTRÄGER FÜR EINE FAHRZEUGKAROSSERIE UND VERFAHREN ZUR E-BESCHICHTUNG EINER FAHRZEUGKAROSSERIE MIT EINEM HYBRIDEN DACHQUERTRÄGER
ÉLÉMENT TRANSVERSAL DE TOIT HYBRIDE POUR CARROSSERIE DE VOITURE ET PROCÉDÉ D'ÉLECTRO-REVÊTEMENT D'UNE CARROSSERIE DE VOITURE COMPRENANT UN ÉLÉMENT TRANSVERSAL DE TOIT HYBRIDE

(43) Date of publication of application: 03.01.2024
(73) Proprietor: Wuhan Lotus Cars Co., Ltd., Wuhan, Hubei (CN)
(72) Inventor: ZHANG, Fan, 65479 Raunheim (DE); GERHARDT, Sven, 65479 Raunheim (DE); STENGER, Ralph, 65479 Raunheim (DE); BRAUNBECK, Bardo, 65479 Raunheim (DE)
(74) Representative: Studio Torta S.p.A.
(86) International application number: PCT/EP2021/054834
(87) International publication number: WO 2022/179695

(56) References cited:
- EP-A1- 2 878 519
- WO-A1-2012/037606
- KR-A- 20180 056 454
- US-A1- 2016 251 038
- US-A1- 2017 137 066

## Description

The present invention pertains to a hybrid roof cross member for a car body. The hybrid roof cross member comprises at least one metal beam component and at least one CFRP component. The roof cross member is connectable to the remainder of a car body such that tensile loads exerted by the remainder of the car body on the roof cross member during the e-coating drying process inside the oven are carried predominantly or solely by the metal beam component. The invention also pertains to a method for e-coating a car body including a hybrid roof cross member.

Roof cross members (EP2878519) known from the art are connected to a car body or the remainder of a car body to form a car's body structure. The car's body structure may be understood to comprise components such as the roof cross member, pillars, spars, which are required for the car body construction. The roof cross member may be a part of the said body structure while at the same time being an integral part of the car roof.

Once the car body structure is assembled during the manufacturing process of a car, the body structure will go through an oven process as part of an e-coating process and will be heated up to ca. 180 °C to dry or cure the paint applied during the e-coating process. The different materials used in the car body, e.g. aluminium, steel or CFRP, exhibit significant differences of thermal expansion coefficients that may lead to thermal deformations as well as joint and part failures during the oven process of an e-coating process.

In particular, the roof cross member may be subject to tension loads and/or pressure loads due to the expansion and shrinking of the car body's side structures. Known CFRP roof cross members might exhibit permanent deformations after or during the e-coating or rather during or afterthe oven process of the e-coating process. This is because the oven temperature is much higher than the glass transition temperature Tg of standard epoxy resins. Therefore, the cross member may be softened and lose its stiffness to a significant degree. The loads applied to the cross member might then deform and/or destroy the structure of the cross member. Furthermore, joint failure may also occur if CFRP components of the roof cross member are joined to Al (aluminium) or steel structures of the car body in general or the roof cross member in particular.

To integrate CFRP components in the car body structure, the existing manufacturing processes and especially the drying/curing processes or oven processes in the paint shop are adapted, such that a stepwise temperature profile and reduced maximum oven temperatures are applied. These changes are costly and require larger investments, including larger areas for ovens and overall longer process times. A cost effective integration of CFRP components in car body structures is therefore not possible or problematic.

The aim of the present invention is to overcome these difficulties and to successfully integrate the CFRP roof cross member or roof bow into a car body i.e. in a car manufacturing body shop without changing the existing manufacturing parameters, in particular the oven or curing processes, and without using expensive epoxy resins.

This aim is achieved by a hybrid roof cross member according to claim 1 and a method for e-coating a car body including a hybrid roof cross member according to claim 9. Preferable embodiments of the invention are subject to the dependent claims.

According to claim 1, a hybrid roof cross member for a car body is provided. The hybrid roof cross member comprises at least one metal beam component and at least one CFRP component. The roof cross member is connectable to a car body, or the remainder of the car body, such that tensile loads exerted by the car body on the roof cross member are carried predominantly or solely by the metal beam component. Clearly, only tensile loads within a certain range may be carried predominantly or solely by the metal beam component, as excessive loads might lead to elongation of the metal beam component which in return could increase the proportion of the load carried by the CFRP component of the hybrid roof cross member.

The tensile loads exerted by the car body on the roof cross member may occur during a curing or oven process, during which the hybrid roof cross member is heated together with the remainder of the car body to a temperature above the glass transition temperature Tg of the epoxy resin of the CFRP component. The heated components may experience varying expansions in dependence on the thermal expansion coefficients of their respective materials, such that the car body's side structures may exert a force on the hybrid roof cross member. In effect, a tensile load may be exerted on the hybrid roof cross member by the car body's side structures. According to the invention, the expansion of the body side structure of the car body is counteracted by the metal beam component of the roof cross member, while the CFRP component is not taking the load and therefore does not suffer any substantial deformation. Thus, by using a metal beam component inside the roof cross member, the deformation of the CFRP cross member or rather of the CFRP component of the roof cross member caused by the car body side structure expansion can be avoided. The metal beam component takes the load from the car body structure and supports the CFRP component and therefore the entire roof cross member during the e-coating drying/curing process of the roof cross member. According to the invention, the roof cross member can be assembled and e-coated in the body shop without changing the existing manufacturing process and without using an expensive high temperature resin.

According to the invention, the metal beam component and the CFRP component are connectable to the car body by the same connection means, in particular the same fastener such as at least one bolted and/or riveted connection. Hence, the connection of the various components may be cost effective and simple at the same time.

According to the invention, the metal beam component is connected to the CFRP component only by the connection means. Using only the same connection means for connecting both, at least some of the components of the hybrid roof cross member to each other and the entire hybrid roof cross member to the car body offers another way of simplifying the construction of the hybrid roof cross member.

In another preferred embodiment of the invention, the hybrid roof cross member comprises at least one connecter, in particular a steel connecter, for connecting the roof cross member to the car body. Two connectors may be used which are positioned on opposite ends of the hybrid roof cross member. The connectors may be symmetrical to each other and/or they may be in contact with the CFRP component on one side and with the remainder of the car body on an opposite side.

In a particularly preferred embodiment of the invention, the connecter, the metal beam component and the CFRP component are connected only by the connection means. The mentioned components may for example comprise aligned through-holes for inserting bolts as connection means.

In another preferred embodiment of the invention, the metal beam component is positioned inside the CFRP component. The metal beam component may be surrounded at least partially or totally by the CFRP component.

In another preferred embodiment of the invention, the metal beam component comprises at least two aluminium and/or magnesium beams, in particular two identical and/or exactly two and/or parallel and/or extrusion aluminium and/or magnesium beams.

In another preferred embodiment of the invention, the CFRP component comprises two, in particular exactly two, CFRP members, an upper member and a lower member. The metal beam component may be sandwiched between the upper member and the lower member. Other metals may be used alternatively. The terms aluminium and magnesium may refer to all commonly used aluminium alloys.

In a particularly preferred embodiment of the invention, the lower member comprises a trough-shaped portion and the metal beam component is positioned inside the trough-shaped portion. The trough-shaped portion may be oriented along the longitudinal direction of the hybrid roof cross, wherein the longitudinal direction of the hybrid roof cross corresponds to the cross direction of the car body.

The invention is also directed at a method for e-coating a car body including a hybrid roof cross member according to any of claims 1 to 8. According to the method, once a coating has been applied to the car body, the car body is heated in an oven, such that a temperature profile is kept constant and a maximum oven temperature is maintained without consideration of the Tg of the epoxy resin of the CFRP component. Accordingly, no stepwise temperature profile has to be applied and the maximum oven temperature may be above the glass transition temperature of an inexpensive epoxy resin. The temperature profile may be kept constant for the substantial part of the heating process.

Further features, details and advantages of the invention are disclosed in the claim set, the following description of the figures and the figures themselves. The figures show:
- Fig. 1:: an exploded view of the hybrid roof cross member;
- Fig. 2:: an exploded view of a portion of the hybrid roof cross member;
- Fig. 3a:: a portion of the hybrid roof cross member in an assembled state;
- Fig. 3b:: a sectional view of the hybrid roof cross member in an assembled state; and
- Fig. 4:: a different sectional view of the hybrid roof cross member in an assembled state.

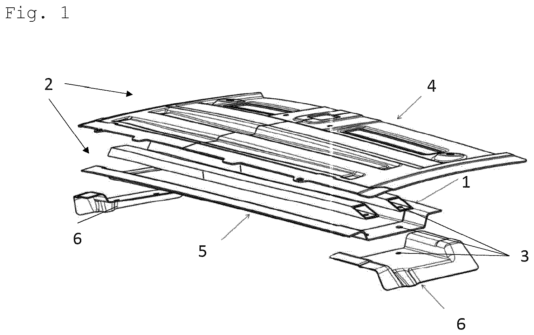

Figure 1 shows an exploded view of the hybrid roof cross member. The hybrid roof cross member comprises at least one metal beam component 1 and at least one CFRP component 2. The roof cross member is connectable to a car body such that tensile loads exerted by the car body on the roof cross member are carried predominantly or solely by the metal beam component 1. The car body is not shown in figure 1.

The metal beam component 1 and the CFRP component 2 are connectable to the car body by the same connection means, in particular the same fastener such as at least one bolted and/or riveted connection. The metal beam component 1 may be connected to the CFRP component 2 only by the connection means. The connection means are not shown in figure 1, however, through-holes 3 for inserting connection means are visible in various components of the hybrid roof cross member.

The hybrid roof cross member comprises at least one connecter 6, in particular a steel connecter 6, for connecting the roof cross member to the car body. In the embodiment of figure 1, two steel connecters 6 are shown on opposite ends in the longitudinal direction of the hybrid roof cross member. The longitudinal direction of the hybrid roof cross member corresponds to the crosswise direction of the car body.

The hybrid roof cross member may be designed such that the connecter 6, the metal beam component 1 and the CFRP component 2 are connected only by the connection means, such as bolts and/or blind rivets. Alternatively, an additional connection between e.g. the CFRP component 2 and the metal beam component 1 may be provided in the form of e.g. an adhesive connection.

In the embodiment of figure 1, the metal beam component 1 comprises exactly two aluminium beams. Alternatively, more or less metal beams may be used to form the metal beam component. 1. It is clear from figure 1 that the term component may be understood in a broad sense and that the individual beams forming the metal beam component 1 do not have to be in direct contact with each other.

The metal beams are shown to be identical and parallel to each other. However, beams of different size may be used and/or the beams may be oriented other than in parallel to each other. The beams may be extrusion beams. The metal beams may comprise chamfered edges at their longitudinal ends, such that the metal beams extend further in a longitudinal direction at their lower portions, shown at their bottom sides in the figure. The lower portions of the beams may comprise through-holes for inserting fastening means, said fastening means not being shown in the figure.

The CFRP component 2 comprises two CFRP members, an upper member 4 and a lower member 5. The upper member 4 may have a greater surface area than the surface area of the lower member 5.

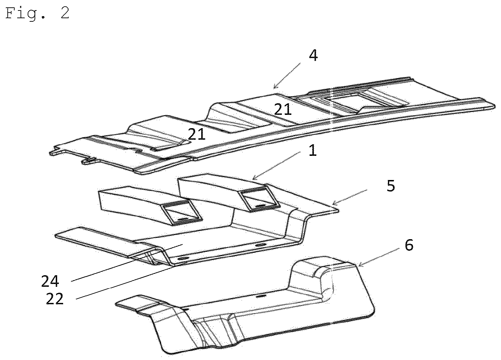

Figure 2 is an exploded view of a portion of the hybrid roof cross member. The metal beam component 1 and the CFRP component 2 are connectable to the car body by the same connection means. For this purpose, the lower member 5, the metal beam component 1 and the connecter 6 all comprise through-holes 3, through which a fastener such as at least one bolt and/or rivet may be inserted. The upper member 4 comprises upper portions 21 for accommodating the metal beam component 1 in an assembled state of the hybrid roof cross member.

The lower member 5 comprises a trough-shaped portion and the metal beam component 1 may be positioned inside the trough-shaped portion. The trough-shaped portion comprises a central flat portion 24, which is spaced apart from a transverse edge 22 and towards the inside of the lower member 5. The transverse edge 22 of the lower member 5 may be positioned adjacent to but higher than the central flat portion 24. The metal beam component 1 may be positioned on the transverse edge 22 in an assembled state of the hybrid roof cross member.

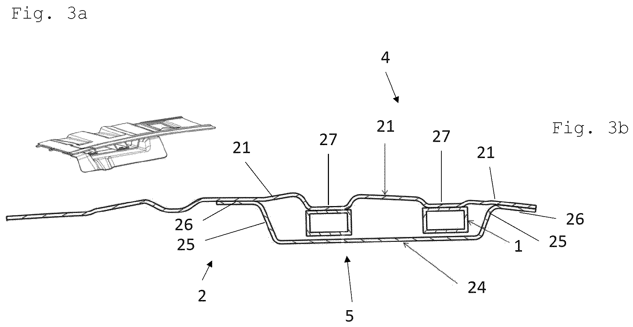

Figure 3a shows a portion of the hybrid roof cross member in an assembled state and figure 3b shows a corresponding sectional view of the hybrid roof cross member in an assembled state. In the assembled state, the metal beam component 1 is positioned inside the CFRP component 2, i.e. between the upper member 4 and the lower member 5 of the CFRP component 2. The cross section of figure 3b is positioned spaced apart from the longitudinal ends of the hybrid roof cross, as a clearance is shown between the metal beam component 1 and the lower member 5.

The lower member 5 comprises one central flat portion 24, which may be bounded by two sloped portions 25. The metal beam component 1 may be positioned above the central flat portion 24 and between the two sloped portions 25. The sloped portions 25 may be oriented perpendicular or at another angle to the central flat portion 24.

Each of the sloped portions 25 may be bounded by a contact portion 26 through which the lower member 5 may be connected to the upper member 4. The contact portions 26 may be aligned in parallel to the portion of the upper member 4 situated directly above them.

The upper member 4 may comprise at least one narrow flat portion 27, which may be aligned in parallel to the metal beam component 1. The narrow flat portion 27 may be adjacent to upper portions 21 of the upper member 4. The upper portions 21 may be positioned above the narrow flat portion 27 and may form the upper-most portions of the upper member 4. In the embodiment of figure 3b, two narrow flat portions 27 are shown, corresponding to the two beams of the metal beam component 1.

The two beams of the metal beam component 1 may be spaced apart from each other by a greater distance then the width of the beams. The width of the beams may be understood as their horizontal extent in figure 3b. The beams may have a rectangular cross section as shown in figure 3b.

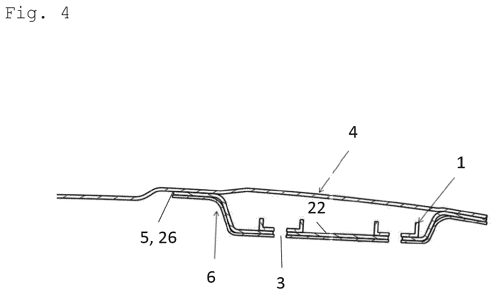

Figure 4 shows a different sectional view of the hybrid roof cross member in an assembled state. The section corresponds to a position of the hybrid roof cross member in which the transverse edge 22 is in contact with the beam component 1. The upper member 4, the lower member 5 and the connecter 6 are shown in close contact to each other in the area of the contact portions 26 of the lower member 5. The lower member 5 is sandwiched between the upper member 4 and the connecter 6 at this position.

Through-holes 3 in the beam component 1, the lower member 5 and the connecter 6 are shown aligned to each other. Connection means such as a bolt / or a blind rivet can be inserted through the through-holes 3 for connecting the components to each other and to a car body side structure. Neither the body structure nor the connection means are shown in the figure.

In the section shown in figure 4, i.e. in a position of the hybrid roof cross member in which the transverse edge 22 is in contact with the beam component 1, the upper member 4 may have an even structure without any of the upper portions 21 shown in figure 3b.

The present invention also relates to a method for e-coating a car body including a hybrid roof cross member as presently described. After a coating layer has been applied to the car body, the car body including the hybrid roof cross member is heated in an oven for curing the coating layer.

Since the construction of the hybrid roof cross member makes it less susceptible to deformation when both, stresses and high temperatures are applied to it, it can be used with a simplified e-coating process and in particular a simplified curing process. According to the invention, during curing, a temperature profile is kept constant and a maximum oven temperature is maintained without consideration of the Tg of the epoxy resin of the CFRP component 2. The maximum temperature may be well above the Tg of the epoxy resin of the CFRP component 2, as the CFRP component 2 is not stressed during the high-temperature curing process.

### Reference numbers

- 1: metal beam component
- 2: CFRP component
- 3: through-holes
- 4: upper member
- 5: lower member
- 6: connecter
- 21: upper portions
- 22: transverse edge
- 24: central flat portion
- 25: sloped portion
- 26: contact portion
- 27: narrow flat portions

## Claims

1. Hybrid roof cross member for a car body comprising at least one metal beam component (1) and at least one CFRP component (2), **characterized in that** the roof cross member is connectable to a car body such that tensile loads exerted by the car body on the roof cross member are carried predominantly or solely by the metal beam component (1), wherein the metal beam component (1) and the CFRP component (2) are connectable to the car body by the same connection means and the metal beam component (1) is connected to the CFRP component (2) only by the connection means.

2. Hybrid roof cross member according to claim 1, **characterized in that** the connection means are the same fastener such as at least one bolted and/or riveted connection.

3. Hybrid roof cross member according to any of the preceding claims, **characterized in that** it comprises at least one connecter (6), in particular a steel connecter (6), for connecting the roof cross member to the car body.

4. Hybrid roof cross member according to claim 3, **characterized in that** the connecter (6), the metal beam component (1) and the CFRP component (2) are connected only by the connection means.

5. Hybrid roof cross member according to any of the preceding claims, **characterized in that** the metal beam component (1) is positioned inside the CFRP component (2).

6. Hybrid roof cross member according to any of the preceding claims, **characterized in that** the metal beam component (1) comprises at least two aluminium and/or magnesium beams, in particular two identical and/or exactly two and/or parallel and/or extrusion aluminium and/or magnesium beams.

7. Hybrid roof cross member according to any of the preceding claims, **characterized in that** the CFRP component (2) comprises two, in particular exactly two, CFRP members, an upper member (4) and a lower member (5).

8. Hybrid roof cross member according to claim 7, **characterized in that** the lower member (5) comprises a trough-shaped portion and that the metal beam component (1) is positioned inside the trough-shaped portion.

9. Method for e-coating a car body including a hybrid roof cross member according to any of the preceding claims, **characterized in that** after a coating has been applied to the car body, the car body is heated in an oven, such that a temperature profile is kept constant and a maximum oven temperature is maintained without consideration of the Tg of the epoxy resin of the CFRP component (2).

## Patentansprüche

1. Hybrides Dachquerträgerelement für eine Fahrzeugkarosserie, umfassend mindestens eine Metallbalkenkomponente (1) und mindestens eine CFK-Komponente (2), **dadurch gekennzeichnet, dass** das Dachquerträgerelement derart mit einer Fahrzeugkarosserie verbindbar ist, dass von der Fahrzeugkarosserie auf das Dachquerträgerelement ausgeübte Zugbeanspruchungen überwiegend oder ausschließlich von der Metallbalkenkomponente (1) aufgenommen werden, wobei die Metallbalkenkomponente (1) und die CFK-Komponente (2) mittels derselben Verbindungsmittel mit der Fahrzeugkarosserie verbindbar sind und die Metallbalkenkomponente (1) mit der CFK-Komponente (2) ausschließlich mittels der Verbindungsmittel verbunden ist.

2. Hybrides Dachquerträgerelement nach Anspruch 1, **dadurch gekennzeichnet, dass** die Verbindungsmittel gleichartige Befestigungsmittel wie mindestens eine Schraub- und/oder Nietverbindung sind.

3. Hybrides Dachquerträgerelement nach einem der vorhergehenden Ansprüche, **dadurch gekennzeichnet, dass** es mindestens ein Verbindungsstück (6), insbesondere ein Stahlverbindungsstück (6), umfasst, um das Dachquerträgerelement mit der Fahrzeugkarosserie zu verbinden.

4. Hybrides Dachquerträgerelement nach Anspruch 3, **dadurch gekennzeichnet, dass** das Verbindungsstück (6), die Metallbalkenkomponente (1) und die CFK-Komponente (2) ausschließlich mittels der Verbindungsmittel verbunden sind.

5. Hybrides Dachquerträgerelement nach einem der vorhergehenden Ansprüche, **dadurch gekennzeichnet, dass** die Metallbalkenkomponente (1) innerhalb der CFK-Komponente (2) positioniert ist.

6. Hybrides Dachquerträgerelement nach einem der vorhergehenden Ansprüche, **dadurch gekennzeichnet, dass** die Metallbalkenkomponente (1) mindestens zwei Aluminium- und/oder Magnesiumbalken, insbesondere zwei identische und/oder genau zwei und/oder parallele und/oder stranggepresste Aluminium- und/oder Magnesiumbalken, umfasst.

7. Hybrides Dachquerträgerelement nach einem der vorhergehenden Ansprüche, **dadurch gekennzeichnet, dass** die CFK-Komponente (2) zwei, insbesondere genau zwei, CFK-Elemente, ein oberes Element (4) und ein unteres Element (5), umfasst.

8. Hybrides Dachquerträgerelement nach Anspruch 7, **dadurch gekennzeichnet, dass** das untere Element (5) einen wannenförmigen Abschnitt umfasst und dass die Metallbalkenkomponente (1) innerhalb des wannenförmigen Abschnitts positioniert ist.

9. Verfahren zur E-Beschichtung einer Fahrzeugkarosserie, die ein hybrides Dachquerträgerelement nach einem der vorhergehenden Ansprüche beinhaltet, **dadurch gekennzeichnet, dass** die Fahrzeugkarosserie, nachdem eine Beschichtung an der Fahrzeugkarosserie angebracht wurde, in einem Ofen erhitzt wird, sodass ein Temperaturprofil konstant beibehalten wird und eine maximale Ofentemperatur ohne Berücksichtigung der Tg des Epoxidharzes der CFK-Komponente (2) aufrechterhalten wird.

## Revendications

1. Élément transversal de toit hybride pour une carrosserie de voiture comprenant au moins un composant de type poutre métallique (1) et au moins un composant en plastique renforcé par fibres de carbone, CFRP (2), **caractérisé en ce que** l'élément transversal de toit est apte à être relié à une carrosserie de voiture de telle sorte que des charges de traction exercées par la carrosserie de voiture sur l'élément transversal de toit soient portées de manière prédominante ou seulement par le composant de type poutre métallique (1), dans lequel le composant de type poutre métallique (1) et le composant en CFRP (2) sont aptes à être reliés à la carrosserie de voiture par les mêmes moyens de liaison et le composant de type poutre métallique (1) est relié au composant en CFRP (2) uniquement par les moyens de liaison.

2. Élément transversal de toit hybride selon la revendication 1, **caractérisé en ce que** les moyens de liaison sont la même attache telle qu'au moins une liaison boulonnée et/ou rivetée.

3. Élément transversal de toit hybride selon l'une quelconque des revendications précédentes, **caractérisé en ce qu'**il comprend au moins un élément de liaison (6), en particulier un élément de liaison en acier (6), pour la liaison de l'élément transversal de toit à la carrosserie de voiture.

4. Élément transversal de toit hybride selon la revendication 3, **caractérisé en ce que** l'élément de liaison (6), le composant de type poutre métallique (1) et le composant en CFRP (2) sont reliés uniquement par les moyens de liaison.

5. Élément transversal de toit hybride selon l'une quelconque des revendications précédentes, **caractérisé en ce que** le composant de type poutre métallique (1) est positionné à l'intérieur du composant en CFRP (2).

6. Élément transversal de toit hybride selon l'une quelconque des revendications précédentes, **caractérisé en ce que** le composant de type poutre métallique (1) comprend au moins deux poutres en aluminium et/ou en magnésium, en particulier deux poutres identiques et/ou exactement deux poutres en aluminium et/ou en magnésium parallèles et/ou d'extrusion.

7. Élément transversal de toit hybride selon l'une quelconque des revendications précédentes, **caractérisé en ce que** le composant en CFRP (2) comprend deux, en particulier exactement deux, éléments en CFRP, un élément supérieur (4) et un élément inférieur (5).

8. Élément transversal de toit hybride selon la revendication 7, **caractérisé en ce que** l'élément inférieur (5) comprend une partie en forme d'auge et **en ce que** le composant de type poutre métallique (1) est positionné à l'intérieur de la partie en forme d'auge.

9. Procédé de e-revêtement d'une carrosserie de voiture incluant un élément transversal de toit hybride selon l'une quelconque des revendications précédentes, **caractérisé en ce qu'**après qu'un revêtement a été appliqué sur la carrosserie de voiture, la carrosserie de voiture est chauffée dans un four, de sorte qu'un profil de température soit maintenu constant et qu'une température de four maximale soit entretenue sans tenir compte de la température de transition vitreuse, Tg, de la résine époxy du composant en CFRP (2).
